# EUROPEAN PATENT SPECIFICATION

(11) **EP 3 854 256 B1**
(45) Date of publication and mention of the grant of the patent: **19.07.2023**
(21) Application number: 20215387.0
(22) Date of filing: 18.12.2020
(51) Int. Cl.: A46B 15/00, A61C 17/22, A61C 17/34

(54) **PERSONAL CARE IMPLEMENT EXHIBITING A SOUND AND USE OF A CONNECTOR FOR PROVIDING A SOUND**
TON-ERZEUGENDES KÖRPERPFLEGEGERÄT UND VERWENDUNG EINES KUPPLUNGSELEMENTS ZUR ERZEUGUNG EINES TONS
APPAREIL DE SOINS PERSONNELS PRÉSENTANT UN SON ET UTILISATION D'UN CONNECTEUR POUR FOURNIR UN SON

(30) Priority: 22.01.2020 EP 20153084; 08.04.2020 EP 20168691; 08.04.2020 EP 20168731; 08.04.2020 EP 20168692; 06.11.2020 EP 20206110; 06.11.2020 EP 20206112; 06.11.2020 EP 20206113; 06.11.2020 EP 20206114; 06.11.2020 EP 20206116; 06.11.2020 EP 20206119; 06.11.2020 EP 20206120
(43) Date of publication of application: 28.07.2021
(73) Proprietor: The Gillette Company LLC, Boston, Massachusetts 02127 (US)
(72) Inventor: JUNGNICKEL, Uwe, 61476 Kronberg (DE); PINTO, Francis, 61476 Kronberg (DE)
(74) Representative: P&G Patent Germany

(56) References cited:
- EP-A1- 3 381 404
- WO-A1-2013/101300
- US-A1- 2019 246 781

## Description

### FIELD OF THE INVENTION

The present disclosure is concerned with a sound and use thereof for providing a signal of securely attaching and/or detaching a head to and from a handle of a personal care implement. The present disclosure is further concerned with a personal care implement comprising a head and a handle, the head being repeatedly attachable to and detachable from the handle, the personal care implement exhibiting a sound when the head gets attached to and/or detached from the handle, thereby providing a signal of secure attachment or detachment. Further, the present disclosure is concerned with a use of a spring-loaded ball-snap connector of a personal care implement comprising a head and a handle, the head being repeatedly attachable to and detachable from the handle, for providing a sound signaling secure attachment and/or detachment of the head to and/or from the handle.

### BACKGROUND OF THE INVENTION

A document in the art is exemplified by US 2019/246781 A1.

Heads and handles for personal care implements, in particular oral care implements, like manual or powered/electrically operated toothbrushes, are well known in the art. Generally, tufts of bristles or other cleaning elements for cleaning teeth and soft tissue in the mouth are attached to a bristle carrier or mounting surface of the brush head intended for insertion into a user's oral cavity. The handle is usually attached to the head, which handle is held by a user during brushing. Usually, heads of manual toothbrushes are permanently connected to the handle, e.g. by injection molding the bristle carrier, the handle, and a neck connecting the head and the handle, in one injection molding step. After the usual lifetime of a toothbrush, i.e. after about three months of use, the toothbrush is discarded. In order to provide environmentally friendly/sustainable manual toothbrushes generating less waste when the brushes are discarded, manual toothbrushes are known comprising heads or head refills being exchangeable, i.e. repeatedly attachable to and detachable from the handle. Instead of buying a completely new toothbrush, consumers can re-use the handle and buy a new head refill only. Such refills are usually less expensive and generate less waste than a conventional toothbrush.

For example, toothbrushes are known comprising a handle to which a replaceable head is connected. The handle is provided with a cavity within which the head is insertable. To provide sufficiently strong connection between the head and the handle, the brush head is formed with a neck having a coupling anchor with a number of recesses for engaging in a complementary engaging mechanism within a collar of the handle.

However, such anchor/engaging mechanism has a relatively complex outer geometry which is not easy to clean after usage of the toothbrush. Toothpaste and slurry may accumulate in recesses of the anchor/engaging mechanism and may prevent the brush head to be accurately attachable to the handle. Also, the user does not receive any feedback if the head is securely attached to the handle.

Further, connector solutions featuring small plastic hooks that interact with respective apertures are known. However, these plastic hooks relax over time rendering the head-handle connection unsecure, and the user needs to actively push back the hooks in parallel to pulling the refill in order to remove the brush head from the handle. Such connector solution is neither intuitive nor consumer friendly.

If the head is not accurately attached/fixed on the handle, for example because the connector is not sufficiently clean as slurry and toothpaste accumulated in small recesses, and/or if the brush head twists away during brushing, the maneuverability of the oral care implement during brushing is poor, impeding the user reaching all areas in the oral cavity. Consequently, maneuverability of the overall brush may not be sufficient. However, in order to achieve and preserve good oral health, and to prevent gingivitis, it is important to clean teeth and gums thoroughly, in particular in hard to reach areas, e. g. in the region of the back molars. Further, gaps between teeth and periodontium, the so-called gingival groove has to be thoroughly cleaned which requires a good and well-coordinated brushing technique, which may not be achievable by using the above-mentioned manual toothbrushes.

It is an object of the present disclosure to provide a personal care implement and a connector for such oral care implement which overcome at least one of the above-mentioned drawbacks Further, it is an object of the present disclosure to provide a signal providing the user with feedback whether or not the head of the personal care implement is securely attached to the handle.

### SUMMARY OF THE INVENTION

In accordance with the invention, a personal care implement as claimed in independent claim 1 and the use of a core-connector unit as claimed in independent claim 9 are provided.

Further aspects of the invention are defined in the dependent claims.

### BRIEF DESCRIPTION OF THE DRAWINGS

The invention is described in more detail below with reference to various embodiments and figures, wherein:
Fig. 1 shows a perspective view of an example embodiment of a manual oral care implement according to the present disclosure, the oral care implement comprising a head, a handle and a connector with a spring-loaded ball-snap element/connector;
Fig. 2 shows a perspective view of the handle with connector of Fig. 1;
Fig. 3 shows a schematic side view of the handle with connector according to Fig. 2;
Fig. 4 shows a schematic front view of the handle with connector according to Fig. 2;
Fig. 5 shows a schematic top-down view of the handle with connector according to Fig. 2;
Fig. 6 shows a front view of an example embodiment of a connector according to the present disclosure;
Fig. 7 shows a side view of the connector of Fig. 6;
Fig. 8 shows a longitudinal cross-sectional view of the handle with connector of Fig. 2;
Fig. 9 shows the cross-sectional view along line A-A;
Fig. 10 shows the cross-sectional view along line B-B;
Fig. 11 shows a schematic perspective view of the head of the manual oral care implement of Fig. 1;
Fig. 12 shows a bottom view of the head of Fig. 11;
Fig. 13 shows an example embodiment of an electrically operated handle for an oral care implement according to the present disclosure;
Fig. 14 shows a graphic representation of "FFT vs. time" of the sound measured when attaching the head to the handle;
Fig. 15 shows a graphic representation of "FFT vs. time" of the sound measured when detaching the head from the handle;
Fig. 16 shows a graphic representation of "tonality frequency vs. time (Hearing Model)" of the sound measured when attaching the head to the handle;
Fig. 17 shows a graphic representation of "tonality vs. time (Hearing Model)" of the sound measured when attaching the head to the handle;
Fig. 18 shows a graphic representation of "tonality frequency vs. time (Hearing Model)" of the sound measured when detaching the head from the handle;
Fig. 19 shows a graphic representation of "tonality vs. time (Hearing Model)" of the sound measured when detaching the head from the handle;
Fig. 20 shows a graphic representation of "loudness vs. time" of the sound measured when detaching the head from the handle;
Fig. 21 shows a graphic representation of "sound level vs. time" of the sound measured when detaching the head from the handle;
Fig. 22 shows a graphic representation of "loudness vs. time" of the sound measured when attaching the head to the handle;
Fig. 23 shows a graphic representation of "sound level vs. time" of the sound measured when attaching the head to the handle;
Fig. 24 shows a perspective view of another example embodiment of an oral care implement according to the present disclosure, the oral care implement comprising a head, a handle with a core-connector unit including a spring-loaded ball-snap element; and
Fig. 25 shows a perspective view of the core-connector unit of the handle of Fig. 24.

### DETAILED DESCRIPTION OF THE INVENTION

A personal care implement according to the present disclosure comprises a head and a handle, the head being repeatedly attachable to and detachable from the handle. When the head gets attached or detached form the handle, the personal care implement exhibits a sound, thereby providing a signal of secure attachment or detachment. In other words, by means of the sound according to the present disclosure, a signal is provided to a user indicating secure attachment and/or detachment of the head to and from the handle of the personal care implement.

The personal care implement may be any type of personal care implement, e.g. a wet shaving razor, or a manual or an electrically operated oral care implement, e.g. a toothbrush. The head may be any type of replaceable refill, e.g. a razor cartridge or an oral-care refill, including but not limited to brush head refills, interdental or toothpick refills, tongue/tissue-cleaner refills, and chemistry-applicator refills. A brush head refill may comprise at least one tooth cleaning element, e.g. a tuft of bristles and/or an elastomeric element, fixed to a mounting surface of the head.

The handle of the personal care implement comprises a connector for repeatedly attaching and detaching the head to and from the handle. The connector may comprise a snap-fit locking mechanism, e.g. a spring-loaded ball connector/element, for securely attaching the head to the handle, and for providing sufficiently strong connection and stability between the head and the handle to enable a user to perform, e.g. a brushing action. According to one aspect of the present disclosure, the spring-loaded ball-snap connector of the personal care implement is used for providing a distinct sound, thereby signaling secure attachment or detachment of the head to or from the handle.

The sound providing the signal of secure attachment/detachment is characterized by a tonal component of about 4000Hz to about 6000Hz, over a time length of about 0.1s to about 0.3s on a tonality frequency vs. time analysis (Hearing Model), or by a tonal component of about 4800Hz to about 5400Hz, over a time length of about 0.12s to about 0.28s, preferably over a time length of about 0.2s, on a tonality frequency vs. time analysis (Hearing Model). Such sound characteristic provides a clear "click" signal with substantially no reverberation time to a user when (s)he attaches or detaches the head to or from the handle.

Within the meaning of the present disclosure, the term "tonality vs. time" is defined and measured according to DIN 45681. In the context of the present disclosure, "tonality vs. time" is used for the determination of tonal components of noises, and for the determination of a tone adjustment for the assessment of noise emissions and serves for the automatic determination of tones and tone groups from narrow band spectra. The result is provided as a level in dB with additional penalty level in dB, together expressing the clarity of a single hearable tone.

Within the meaning of the present disclosure "tonality vs. time (Hearing Model of Sottek)" refines the tonality definition of DIN 45681 to the psychoacoustic human perception (i.e. the Hearing Model of Sottek takes the human perception into account by applying a psychoacoustic calculation method for the identification and evaluation of tonal components), and delivers one single value with the unit "tuHMS" ("tonality units according to the Hearing Model of Sottek").

The Hearing Model of Sottek describes a theoretical model of the monaural signal processing of the human hearing. The human hearing outclasses available technical systems in terms of performance and flexibility when it comes to sound analysis. As physically orientated analytical methods cannot reproduce the human hearing sensation regarding the judgment of sound quality, the sound perception has to be supplemented by a psychoacoustic model. The Hearing Model of Sottek developped a mathematical model of sound perception, thereby taking the relations between acoustic stimuli and evoked sensations into account. To cover as many psychoacoustic phenomena as possible, a theoretical model based upon the physiology of the human ear was developed that explains and describes psychoacoustic effects and basic auditory sensations. "Tonality vs. time (Hearing Model of Sottek, or in short Hearing Model)" is specified in Standard ECMA-74, 17^{th} edition.

The sound according to the present disclosure may have a tonality vs. time (Hearing Model) of about 0.1tuHMS to about 1.2tuHMS, or of about 0.4tuHMS to about 0.9tuHMS, as measured according to ECMA-74 (17^{th} edition).

Within the meaning of the present disclosure "tonality frequency vs. time (Hearing Model)" indicates the dominant frequency of the noise/sound, similar to "tonality vs. time (Hearing Model of Sottek)".

With regards to generic sound analysis, within the meaning of the present disclosure, "FFT (Fast Fourier Transformation) vs. time" is a 3D-diagram, displaying the sound pressure levels of frequencies during a noise/sound event over time.

The sound according to the present disclosure may have a sound level vs. time of about 50dB(A) to about 60dB(A), or of about 56dB(A) to about 58dB(A), over a time period of about 0.12 to about 0.28s, or about 0.2s. Within the meaning of the present disclosure, "level vs. time" indicates the sound pressure level trend during a noise/sound event. The level analysis is a simple signal analysis to represent the amplitude of a signal as a logarithmic value in dB.

The sound according to the present disclosure may have a loudness vs. time of about 1soneGF to about 3soneGF, or of about 1.5soneGF to about 2.5soneGF, over a time period of about 0.12 to about 0.28s, or about 0.2s, as measured according to ISO 532-1. Within the meaning of the present disclosure, "loudness vs. time" is defined and measured according to ISO 532-1. "Loudness vs. time" is similar to "level vs. time", but relates to the psychoacoustic perception of humans.

The sound according to the present disclosure may have a specific loudness of about 5soneGF to about 9soneGF, or of about 6soneGF to about 8soneGF, over a time period of about 0.12 to about 0.28s, or about 0.2s, as measured according to ISO 532-1. Within the meaning of the present disclosure, "specific loudness" is defined and measured according to ISO 532-1.

The "specific loudness" represents the distribution of loudness across critical bands related to the so-called "Bark Scale". The Bark Scale is an arrangement of 24 critical frequency bands, each of which being defined according to the manner of human hearing.

The personal care implement according to the present disclosure may be a manual oral care implement comprising a handle and a head on which at least one tooth and/or tissues cleaning element, e.g. a tuft of bristles and/or an elastomeric element, can be fixed. The head is repeatedly attachable to and detachable from the handle. The oral care implement may be a manual toothbrush, or alternatively an inter-proximal pick, a plaque scraper or tissue/tongue cleanser.

The head of the oral care implement is attachable to the handle via a connector which provides a snap-fit locking mechanism to ensure sufficiently strong connection and stability between the head and the handle, e.g. to enable a user to perform a brushing action. The connector may have an outer lateral surface and a recess therein, the recess forming a cavity within the connector. Within the cavity a spring-loaded ball-snap element is provided. The spring-loaded ball-snap element may comprise a ball and a spring, the spring applying a radial force onto the ball in a direction towards the outer lateral surface of the connector. In the following a radial force is defined by a force applied in a direction being substantially perpendicular to the longitudinal length extension of the connector. The spring applies a force onto the ball and pushes the ball outwards so that the ball extends slightly beyond the outer lateral surface of the connector. An inner wall of a hollow portion provided in the head may comprise a recess for receiving the ball of the spring-loaded ball element. Once the head is snap-fitted onto the connector, the head is fixed on the handle/connector in an axial direction. In other words, the connector and the oral care implement comprising such connector, respectively, allow for easy attachment/detachment of the head to and from the handle. The user can attach the brush head to the handle by a simple linear motion. Further, the ball-snap provides a precise fixation of the brush head, and a distinct acoustic and haptic feedback is given to the user that the head is snapped-on securely. In other words, the user recognizes once the ball engages into the recess provided in the inner wall of the hollow portion of the head by the distinct sound according to the present disclosure. Also, the brush head can be easily removed, i.e. without performing a synchronized action with other elements/unlocking mechanisms.

The head may be fixed on the handle until a specific/predetermined pull-off force is applied. The connection between the head and connector is sufficiently strong enabling well-coordinated brushing techniques. The head does not get loosened from the handle and does not twist aside during brushing.

The ball and/or the spring of the spring-loaded ball element may be made from stainless steel. While typical snap elements comprise a spring element made from plastic that shows relaxation and aging effects over time, a stainless steel spring shows a constant spring rate over time, also under extended use conditions (e.g. temperature). A spring-loaded ball element made from stainless steel may provide long-lasting, reliable fixation of the head on the connector/handle as well as the distinctive sound according to the present disclosure. The spring-loaded ball element may be fixed in the cavity by a press-fitting process and/or gluing.

The connector may comprise a first substantially cylindrical section and a second substantially cylindrical section, wherein the first and the second cylindrical sections may be connected by an at least partially conically shaped section. The first substantially cylindrical section, the at least partially conically shaped section and the second substantially cylindrical section may be arranged in consecutive order and may define a longitudinal length extension of the connector. The first and the second substantially cylindrical sections may be placed off-center with respect to the longitudinal length extension of the connector.

In the following, a substantially cylindrical section is defined by a three-dimensional body having a longitudinal length extension and a cross-sectional area extending substantially perpendicular to the longitudinal length extension. The cross-sectional area has a shape being substantially constant along the longitudinal length extension. Since the connector may be manufactured by an injection molding process, a substantially cylindrical section also comprises sections/bodies which have a slight draft angle of up to 2°. In other words, a substantially cylindrical section also comprises a section/body which tapers slightly by up to 2° towards a proximal end which is closest to the head once the head is attached to the connector.

The cross-sectional area may have any shape, for example substantially circular, ellipsoid, rectangular, semi-circular, circular with a flattening portion, convex or concave. The cross-sectional area may have the shape of a polygon, for example of a square or triangle. The outer lateral surface circumventing the cylinder along its length extension can be defined as being composed of straight lines which are substantially parallel with respect to the longitudinal length extension of the cylinder.

The head of the oral care implement has a distal end and a proximal end, the proximal end being defined as the end closest to the handle. The proximal end of the head may comprise a hollow portion for receiving a part of the connector, for example, the second substantially cylindrical section, the at least partially conically shaped section and a part of the first substantially cylindrical section. The hollow portion of the head may have an inner wall with a geometry/contour which corresponds to the outer geometry/contour of the part of the connector to be inserted into the hollow portion of the head. The eccentric arrangement/off-center positioning of the substantially cylindrical sections of the connector enables precise positioning of the brush head on the handle. The geometric position of the head can be clearly defined. As the handle comprises the connector at a proximal end being closest to the head, the eccentric/off-center arrangement of the two substantially cylindrical sections may act as a guidance element when a user attaches the head to the handle. In other words, the two substantially cylindrical sections may allow for accurate fitting between the head and the handle. Further, the eccentric/off-center arrangement of the two substantially cylindrical sections may provide an anti-twist protection for the head on the handle during brushing, for example if a lateral force is applied onto the head.

At least a portion of the head, e. g. the neck/shaft and the bristle carrier may be at least partially made from a material having a density from about 0.5 g/cm³ to about 1.2 g/cm³, or from about 0.7 g/cm³ to about 1.0 g/cm³, or about 0.9 g/cm³. For example, the head may be injection molded from a thermoplastic polymer, e.g. polypropylene having a density of about 0.9 g/cm³. When the ball of the spring-loaded ball-snap connector snaps into a corresponding recess provided in the inner wall od the hollow portion of the head shaft, then the distinct click sound according to the present disclosure is generated thereby providing the user with feedback that the head is securely attached/detached to/from the handle/connector.

To allow sufficiently good fitting of the brush head on the connector if production tolerances occur, the inner wall of the hollow portion of the head may comprise at least one rip, or two rips being arranged opposite each other, for precisely adjusting the head on the connector/handle. Furthermore, the at least one rip may prevent compression of air in the hollow portion of the head which could act like a spring or as additional resistance while snapping the head on the connector/handle.

The first substantially cylindrical section and the second substantially cylindrical section have a length extension and a cross-sectional area extending substantially perpendicular to the length extension, and the cross-sectional area of the first substantially cylindrical section and/or second of the second substantially cylindrical section may be substantially circular. Such geometry provides a robust and simple structure which is easy to clean after usage of the oral care implement. Further, since the outer geometry is relatively simple, such connector can be manufactured in a cost-efficient manner.

The first substantially cylindrical section may have a cross-sectional area being greater than the cross-sectional area of the second substantially cylindrical section. For example, the first substantially cylindrical section to be inserted into a hollow portion at the proximal end of the handle, may have a substantially circular cross-sectional area with a diameter of about 8 mm to about 10 mm, preferably about 9 mm, while the second substantially cylindrical section to be inserted into a hollow portion at the proximal end of the head, may have a substantially circular cross-sectional area with a diameter of about 4 mm to about 6 mm, preferably about 5 mm.

The first and the second substantially cylindrical sections may have a first and a second longitudinal central axis, respectively which are defined as the symmetry axis of the first and the second substantially cylindrical sections. The first and the second substantially cylindrical sections may be placed/arranged with respect to each other so that the second longitudinal central axis of the second cylindrical section is located off-center with respect to the first longitudinal central axis of the first cylindrical section by about 1 mm to about 2.5 mm, or by about 1.5 mm to about 2 mm, or by about 1.65 mm. In other words, the center of the second substantially cylindrical section is offset/eccentric from the longitudinal central axis of the first substantially cylindrical section by a distance of about 1 mm to about 2.5 mm, or of about 1.5 mm to about 2 mm, or of about 1.65 mm. Such connector may be easy to manufacture, e.g. by injection molding, and provides sufficient torsional stability for the oral care implement if lateral forces are applied onto the brush head.

The first and/or the second substantially cylindrical section may comprise a flattening portion extending along the length extension of the first and/or second substantially cylindrical section. Such flattening portion may provide the toothbrush with additional anti-twist protection for the head being connected to the handle during brushing, for example if a lateral force is applied onto the head.

The first and the second substantially cylindrical sections have a first and a second outer surface, respectively, and the first and the second substantially cylindrical sections may be arranged with respect to each other so that a part of the first outer surface and a part the second outer surfaces are substantially in straight alignment. The flattening portion, optionally comprising the spring-loaded ball element, may be arranged opposite the first and second outer surfaces being substantially in straight alignment. Such connector has an easy to clean outer geometry. The connector is robust, easy to use, and can be manufactured in a cost-efficient manner.

The handle for the oral care implement has a distal end and a proximal end, the proximal end being opposite the distal end and closest to the head when the head is attached to the handle. The proximal end of the handle may comprise a hollow portion/recess into which a part of the first substantially cylindrical section is fixed, e.g. by a press-fitting process and/or gluing. If the connector forms a part of the handle, the connector - representing a relatively expensive part of the overall oral care implement - can be used over an extended/longer period of time. The head having a relatively simple structure and being relatively cheap as compared to the handle comprising the connector, can be replaced every three months. A new head refill can be purchased at relatively low costs. While replaceable brush heads according to the state of the art consist out of an assembly of multiple parts or comprise at least one additional insert, the frequently exchangeable brush heads for the oral care implement according to the present disclosure can be produced at lower costs.

The proximal end of the handle may comprise a chamfered surface. Such chamfered surface may provide the oral care implement with additional anti-twist protection during use. The chamfered surface and a cross-sectional area of the handle may define an angle α from about 15° to about 30°, or from about 18° to about 28°, or about 25°. Said cross-sectional area is defined by an area extends substantially perpendicular to the longitudinal length extension of the handle. Surprisingly, it has been found out that such angled/chamfered surface provides superior anti-twist protection. Furthermore, the angled/chamfered surface allows for draining-off fluids, like toothpaste slurry and saliva, after use of the oral care implement, thereby preventing accumulation of such fluids over time.

The connector and the oral care implement comprising such connector, respectively, allow for easy attachment/detachment of the head to and from the handle, thereby providing the user with a distinct "click" sound signaling that the head is securely/properly attached to the handle/connector. Also, the user can attach the head to the handle by a simple linear motion. With the specific design of the substantially cylindrical sections being arranged off-center, and the chamfered surface of the handle, the head is turned into the right orientation automatically during the attachment motion (within certain tolerances). Therefore, the consumer is not forced to precisely position the head on the handle before snapping it on. Further, the ball-snap provides a precise fixation of the brush head, and a distinct haptic and acoustic feedback is given to the consumer that the head is snapped-on securely. The brush head can be easily removed, without any synchronized action with other elements (unlocking mechanisms). In addition, the connector can be cleaned easily. The specific design of the connector may not have any recesses in which dirt, toothpaste and/or saliva accumulate. The connector may also avoid any fragile structures by comprising substantially round edges, only, which may prevent easy breakage or damage of the surfaces.

The weight of the handle material may be relatively high, to provide a user with high-quality perception and comfortable feeling during use of the oral care implement. Usually users are accustomed that products, in particular in the personal health care sector, have a specific weight that guarantees high product quality and provides comfortable feeling during use of the product. Consequently, such oral care implement provides such superior product quality perception. The handle may be at least partially made from a material having a density from about 2.1 g/cm³ to about 3.1 g/cm³, or from about 2.3 g/cm³ to about 2.8 g/cm³, or from about 2.5 g/cm³ to about 2.7 g/cm³.

Further, since the material of the handle may have a higher density than the material of the head, the center of mass/center of gravity lies within the handle (even if the brush head is loaded with toothpaste) which enables users to perform a well-coordinated brushing technique with improved sensory feeling during brushing. The center of gravity provided in the center of the handle may provide an oral care implement which is better balanced and does not tip over / does not get head loaded once toothpaste is applied onto the brush head. When users apply different grip styles/brushing techniques, the oral care implement according to the present disclosure has the advantage that the center of gravity is in or very close to the pivot point of the wrist joint. A balanced toothbrush is easier to control in the mouth, thereby allowing more precise and accurate brushing movements which enables better cleaning.

While the high quality and relatively expensive handle of the oral care implement may be adapted for use over a longer period of time as compared to common manual toothbrushes which are discarded after about three months of use, the relatively cheap brush refill can be exchanged on a regular basis, e.g. after about three months. This provides a cost-efficient and environmentally sustainable high quality oral care implement with improved handling properties.

In the past, it has been seen that after use of the brush/after brushing the teeth the user usually stores the wet brush in a toothbrush beaker for drying. However, in a classical toothbrush beaker, drained fluids get collected and accumulated at the bottom of the beaker, and, the fluids stay in contact with the toothbrush for a longer period of time. Since the beaker is open on one side only, the toothbrush dries relatively slowly. Bacteria living in wet conditions/in a wet environment can grow quickly, contaminate the toothbrush and finally render the brush unhygienic. Consequently, there exists a need for a solution for hygienically storing and drying a manual toothbrush, thereby enabling remaining water, toothpaste slurry and saliva to drain off from the brush. The brush shall dry quickly thereby inhibiting bacterial growth.

The material of the head may be made of a non-magnetic or non-ferromagnetic material, while the material of the handle may be made from a magnetic and/or ferromagnetic material. Magnetic/ferromagnetic material possesses not only a relatively high density, and, thus, a relatively heavy weight, which may provide the oral care implement with the above-mentioned benefits, but the magnetic/ferromagnetic material also enables the oral care implement to be magnetically attachable to a magnetic holder. The magnetic/ferromagnetic material of the handle may allow for hygienic storage of the oral care implement. If the oral care implement is magnetically attached to a magnetic holder, remaining water, toothpaste slurry and saliva can drain off from the brush. The oral care implement can dry relatively quickly. Consequently, bacteria growth can significantly be reduced, thereby rendering the oral care implement more hygienic. In contrast to a common toothbrush being stored in a toothbrush beaker where drained fluids get collected and accumulated at the bottom of the beaker, the brush according to the present disclosure is exposed to wet conditions over a significantly shorter period of time.

For example, the magnetic holder may have the form of a flat disk attachable to a wall. Such flat disk may represent an easy to clean surface. Further, a user just needs to bring the oral care implement in close proximity to the magnetic holder, and then the oral care implement gets attached automatically. No precise positioning or threading as in common toothbrush holder is required. Since the magnetic properties are merely provided in the handle, and not in the head, the head portion cannot accidentally be attached to the magnetic holder, thereby reducing the risk that the magnetic holder gets soiled.

The magnetic and/or ferromagnetic material forming at least a part of the handle may comprise an amorphous thermoplastic resin. The magnetic and/or ferromagnetic material may further comprise aluminum oxide, boron nitride or aluminum silicate. Furthermore, the magnetic and/or ferromagnetic material may comprise in addition or alternatively iron oxide. The magnetic and/or ferromagnetic material may further comprise glass fibers which may be pre-mixed with at least a portion of the amorphous thermoplastic resin. Such handle material allows for control of the weight of the handle in whatever location, e.g. by filler variation. Control of the overall toothbrush is required due to the relatively high weight of the handle. It is now possible to use the mass/weight distribution of the material for adaption of the inertial moment of the finished toothbrush.

The magnetic and/or ferromagnetic material may comprise from about 13 weight percent to about 30 weight percent of an amorphous thermoplastic resin; from about 3 weight percent to about 25 weight percent of aluminum oxide, boron nitride or aluminum silicate; and from about 45 weight percent to about 67 weight percent of iron oxide. Such composition provides a material density that is about three times the density of a standard plastic material used for toothbrushes, e.g. polypropylene. With higher weight and higher thermal conductivity, the material drives value perception, in particular in combination with a galvanic coating. Such coating may be made from real metal. The galvanic coating can be applied in a selective electroplating process. During this coating process for a multicomponent plastic part, a metallic layer is only deposited on a hard material while a further over molded soft component may remain unaffected.

The magnetic and/or ferromagnetic material may comprise about 27.5 weight percent of an amorphous thermoplastic resin, about 17 weight percent of aluminum oxide, about 51 weight percent of iron oxide, and about 4.5% glass fiber.

The amorphous thermoplastic resin may comprise a styrene resin, e.g. styrene acrylonitrile "SAN". The amorphous thermoplastic resin may be selected from the list consisting of acrylonitrile butadiene styrene, polystyrene, and styrene acrylonitrile.

The amorphous thermoplastic resin may comprise about 17% weight percent styrene acrylonitrile, and 10.5 weight percent of a mixture comprising polybutylene terephthalate and polyethylene terephthalate.

Surprisingly, it has been found out that said composition provides a high gravity molding material appropriate for injection molding or extrusion molding. A high specific gravity molding material high in surface hardness, excellent in coating characteristics as well as excellent in thermal conductivity can be provided.

The use of molding materials having a relatively high specific gravity is known. Such molding materials usually contain a polymeric resin and a high-density filler such as iron oxide. However, in such molding materials the amount of iron oxide which can be included is limited as the thermal conductivity properties of the molding material are relatively poor. Thus, on the one side, lower thermal conductivity leads to relatively longer cycle times during manufacturing to allow the molding material to cool after molding. On the other side, if heavy polymeric materials are filled with high heat conductive additives such as metal powder or fibers, the addition of these materials leads to tight process windows in molding because of the immediate freezing when the molten material contacts the cold wall of the tool. This fast freezing leads to high injection speed and low flow length to wall thickness ratio at the produced part.

Now, it has been surprisingly found out that the molding material according to the present disclosure has a high specific gravity and optimally controlled thermal conductivity properties to reduce or expand the time needed for the molding material to cool during or after injection molding. Surprisingly, it has been found out that a relatively high percentage of iron oxide can be maintained in the molding material while improving on the thermal conductivity properties of the molding material. The addition of aluminum oxide, boron nitride or aluminum silicate provides the molding material with improved thermal conductivity as compared to materials containing a styrene resin and iron oxide only. This improved thermal conductivity may lead to lower cycle times as the molding material needs less time to cool after molding.

Another benefit of adding aluminum oxide, boron nitride or aluminum silicate to the material is the ability to increase the overall amount of iron oxide in the molding material as compared with materials comprising iron oxide and resins of the past. The improvements in the molding material properties come from the addition of relatively small amounts of aluminum oxide, boron nitride or aluminum silicate. A material composition comprising a relatively high percentage of iron oxide (magnetite), i.e. from about 45 weight percent to about 67 weight percent, preferably about 51 weight percent, provides good magnetic properties and a relatively heavy weight of the overall material.

Styrene acrylonitrile "SAN" may provide high thermal resistance properties. The acrylonitrile units in the chain enable SAN to have a glass transition temperature greater than 100°C. The properties of SAN may allow for reduced cycle time due to relatively earlier and quicker transition temperature. Amorphous polymers are suitable for heavy resin compounds of the present disclosure due to the glass transition temperature Tg at which an amorphous polymer is transformed, in a reversible way, from a viscous or rubbery condition to a hard one. By injection molding of the heavy resin material of the present disclosure the temperature of the material melt is above the Tg region (viscous or rubbery condition). During cooling the compound attains the high Tg temperature early and reaches dimensional stability (glassy condition). Over-molding of the heavy resin material is possible as the material stays dimensional stable due to the high Tg of the material.

Polybutylene terephthalate (PBT) and/or polyethylene terephthalate (PET) may provide the handle with high quality surface properties, including improved optical characteristics, and high impact strength. Once heated, a mixture of PBT and PET represent a high temperature-resistant melt having low viscosity and a high Melt Flow Index (MFI). Therefore, processability of the magnetic/ferromagnetic material during molding is improved.

It is known, that heavy resin materials tend to show high shrinkage effects for products having thick walls/dimensions. However, it has been surprisingly found out that glass fibers added to the magentic/ferromagentic material provide the material composition with improved stability and low shrinkage effects.

Alternatively, the handle of a manual personal care implement may comprise a core-connector unit with a connector having the same structural set-up as described above. In accordance with the above disclosure, the connector may comprise a snap-fit locking mechanism, e.g. a spring-loaded ball snap element, for securely attaching the head to the handle, and for providing sufficiently strong connection and stability between the head and the handle to enable a user to perform, e.g. a brushing action. The connector provides a user with feedback via a specific/distinct "click" sound that the head is securely attached to/detached from the handle. The connector may be unitarily formed with a core structure and may form with the core structure a core-connector unit. The core-connector unit may be formed as one piece which cannot be separated without destroying the unit. The core structure may be at least partially embedded in another handle material.

The core-connector unit may be made from a fiber reinforced material. The fiber reinforced material may be a composite material made of a polymer matrix reinforced with fibers. The polymer base material may be selected from the group of: polyamide (PA, e.g. PA6, PA66), styrene acrylonitrile resin (SAN), polybutylene terephthalate (PBT), polyethylene terephthalate (PET), recycled plastic materials, or mixtures thereof. The polymer base material may at least partially contain recycled plastic material.

Styrene acrylonitrile (SAN) as a polymer base material may provide high thermal resistance properties. The acrylonitrile units in the chain enable SAN to have a glass transition temperature greater than 100°C. The properties of SAN may allow for reduced cycle time during a molding step due to relatively earlier and quicker transition temperature. By injection molding of the fiber reinforced material of the present disclosure, the temperature of the material melt is above the Tg region (viscous or rubbery condition). During cooling the compound attains the high Tg temperature early and reaches dimensional stability (glassy condition). Over-molding of the fiber reinforced material is possible as the material stays dimensional stable due to the high Tg of the material.

Polybutylene terephthalate (PBT) and/or polyethylene terephthalate (PET) as a polymer base material may provide the handle with high quality surface properties, including improved optical characteristics, and high impact strength. Once heated, polybutylene terephthalate and polyethylene terephthalate represent a high temperature-resistant melt having low viscosity and a high Melt Flow Index (MFI). Therefore, processability of the fiber reinforced material during molding may be improved.

Polyamide (PA) is defined as a polymer with repeating units linked by amide bonds. Polyamides exhibit high durability and strength. For example, polycaprolactam (PA6) and nylon6-6 (PA66) possess high tensile strength, rigidity, good stability under head as well as elasticity and lustre. PA6 and PA66 are highly resistant to abrasion and chemicals such as acids and alkalis. PA6 is generally white and can be dyed prior to production to various colors.

The fibers may be selected from the group of: inorganic particulates, glass fibers, carbon fibers, aramid fibers, basalt fibers, wood fibers, or any combinations thereof. Glass fibers may improve strength, elasticity and heat resistance of the polymer base material. Carbon and aramid fibers may improve elasticity, tensile and compression strength of the polymer base material. Wood fibers may improve flexural strength, tensile modulus, and tensile strength of the polymer base material. Inorganic particulates may improve isotropic shrinkage, abrasion and compression strength of the polymer base material.

The fiber reinforced material may comprise from about 10wt% to about 50wt%, or from about 25wt% to about 35wt%, or about 30wt% fibers. The core-connector unit may be made from a glass fiber reinforced polymer material comprising about 30wt% glass fiber. The polymer material may be a polyamide or polybutylene terephthalate, polyethylene terephthalate, or a combination of polybutylene terephthalate and polyethylene terephthalate.

The glass fibers embedded in the polymer material may provide significantly increased stiffness, wear resistance and integrity to the polymer material forming the core-connector unit. For personal implements, e.g. oral care handles from which the heads are getting frequently detached and re-attached, such material provides the connector with wear resistance allowing the handle to be used over a longer period of time. Long lasting connector properties are in particular important for toothbrushes as the head and handle often get soiled with slurry and toothpaste containing abrasive particles. If the connector material is not sufficiently resistant against abrasives, the abrasives may grind/sand down material of the connector, thereby changing the outer geometry of the connector. As a result, the connector may lose its function, and/or its ability to securely hold the head in place during use, e.g. during brushing.

The fiber reinforced material may have a density from about 1 g/cm³ to about 1.7 g/cm³, preferably about 1.4 g/cm³.

The handle may further comprise a second component at least partially covering the core structure. The core-connector unit together with the second component may define the overall length extension of the handle. The second material may comprise a filler material, e.g. an inorganic filler material. The inorganic filler material may be selected from the group of: zinc oxide, iron oxide, barium sulfate, titanium dioxide, aluminium oxide, or any combinations thereof. The filler material may constitute from about 50wt% to about 80wt% of the polymeric material. Zinc oxide, iron oxide, barium sulfate and titanium dioxide have a density of at least 4 g/cm³, and may, thus, provide the polymeric material forming the second component with a relatively heavy weight. Further, a relatively high thermal conductivity of the second component can be provided if zinc oxide and/or aluminium oxide is used as a filler material.

The second component may be made from a polymeric material comprising a base material and an inorganic filler material, wherein the base material may be selected from the following: polyamide, styrene acrylonitrile resin, polybutylene terephthalate, polyethylene terephthalate recycled plastic materials, or mixtures thereof. The polymer base material may at least partially contain recycled plastic material. The inorganic filler material may constitute from about 50wt% to about 80wt% of the polymeric material.

The polymeric material of the second component may have a density from about 2 g/cm³ to about 3.5 g/cm³, preferably about 2.7 g/cm³. A density of about 2.7 g/cm³ may be provided by a polymeric material comprising an inorganic filler material and a base material, wherein the base material may be polyamide, and wherein the inorganic filler material may be zinc oxide constituting from about 70wt% to about 75wt% of the polymeric material.

In case zinc oxide is used as a filler material having a substantially white/light color, the second component base material can be colored with any type of dye. Instead of applying an additional coating, e.g. by electroplating and/or lacquering the second component with a color coating (which would be required if a black/dark filler material was used, e.g. iron oxide), dye master batches can simply be added to the base material/second component material.

With a density from about 2 g/cm³ to about 3.5 g/cm³, preferably about 2.7 g/cm³, the second component is significantly heavier and provides a different haptic impression to consumers during use of the handle as compared to commonly used handle materials, e.g. polypropylene having a density of about 0.9 g/cm³ only. As the weight of the handle material may be relatively high, this may provide a user with high-quality perception and comfortable feeling during use of the personal care implement. Usually, users are accustomed that products, in particular in the personal care sector, have a specific weight that guarantees high product quality and provides comfortable feeling during use of the product. Consequently, the handle for the personal care implement according to the present disclosure may provide such superior product quality perception.

By using different materials for the core-connector unit and the second component, respectively, the handle properties can be improved with regards to different aspects at the same time. The second component comprising a relatively high amount of filler material (i.e. at least 50wt%) provides the overall handle with a high specific weight, as well as with higher heat conductivity and heat capacity as compared to handles made from e.g. polypropylene. Thus, the handle according to the present disclosure can be perceived as a premium handle versus handles made from standard plastic materials. Height weight/lower temperature are typically attributes that are linked to materials like metal or ceramic, that typically represents a higher level of quality and price point.

However, on the other side, materials with high amount of filler material are more brittle than standard plastic materials, and, thus, can break more easily, e.g. if the handle is dropped to the ground, or hits against a hard object. Surprisingly, it has been found out that the core structure according to the present disclosure may compensate for the brittle characteristics of the second component if the core structure comprises a length extension extending at least 20%, preferably at least 25%, further preferably at least 50%, even more preferably at least 75%, or at least 85% along the overall length extension of the handle. By adding fibers, e.g. glass fibers, to the polymer base material, the properties of the polymer base is improved with regards to strength, elasticity and heat resistance. According to the present disclosure, the fiber reinforced material forming the core structure can compensate for the increased brittleness of the polymeric material of the second component and may ensure integrity of the product over lifetime, e.g. when the handle is dropped to the floor. By forming the connector together with the core structure, solid attachment of the head to the handle can be ensured, as well. As not only the core structure, but also the connector is formed from the fiber reinforced material, the fit of the head onto the connector of the handle may less likely wear out over the life time of the personal care implement, thereby providing not only a high quality consumer product, but also a more sustainable, and eco-friendly personal care implement.

Further, since the connector and the core structure are made as one unitary piece, e.g. in a single injection molding step, manufacturing can be simplified, and manufacturing costs reduced. Also, the combination of the specific materials used for the core-connector unit and the second component allows for simple overmolding of the core-connector unit with the polymeric material of the second component without the need for complex assembly steps.

Alternatively, the handle of the personal/oral care implement may be electrically operated. Such handle may comprise a housing with an inner cavity, the inner cavity being defined by an inner surface of the housing. The housing may be made from a hard plastic material, or from a metal material, for example stainless steel or aluminium. Such materials are highly durable and allow for slim product designs.

For example, the personal care implement may be battery-operated and may comprise a battery located within the inner cavity of the handle housing. The head may be repeatedly attachable to and detachable from the handle, e.g. via a snap-fit locking mechanism as discussed above, thereby providing sufficiently strong connection and stability between the head and the handle to enable a user to perform, e.g. a brushing action. The connector provides the user with acoustic feedback as discussed above when the head gets attached to and detached from the handle.

In order to communicate to a user if too much pressure is applied during use of the personal care implement, the handle may comprise a swivel-mounted connector-pressure-sensor unit unitarily made as one piece. In other words, the unit may comprise a connector for repeatedly attaching and detaching the head to and from the handle, and a pressure senor. The connector and the pressure sensor may be made as one inseparable piece. The connector extends through an opening at the proximal end of the housing allowing for repeatedly attaching and detaching the head to and from the handle. The pressure sensor may comprise a pivot lever. The pivot lever may be accommodated within the inner cavity of the housing and may extend with its distal end towards the distal end of the housing. The pivot lever of the swivel-mounted connector-pressure-sensor unit may be attached to the housing, preferably close to the proximal end, via a pivot axis to allow the unit to move/swivel to a certain degree. In other words, while the pivot lever is connected to the housing via a pivot axis at the proximal end of the housing, the brush head is attached on a connector geometry of the pivot lever outside of the housing. Using a swivel-mounted connector-pressure-sensor unit according to the present disclosure allows for a simple handle construction, and, thus, simplified manufacturing. The pivot lever and/or the connector may be unitarily molded from a hard plastic material to provide a relatively cheap and robust component/unit.

The pivot lever may activate a pressure sensor switch, e.g. arranged on a Printed Circuit Board Assembly (PCBA). If a predefined level of force, e.g. 5N or more, is applied onto the head of the personal care implement, the pivot lever pivots within the inner cavity of the handle; the pressure sensor switch comes in contact with the PCBA to trigger a light signal visible to a user. The PCBA mechanically supports and electrically connects electrical or electronic components using conductive tracks. Via the PCBA electrical communication between the energy source and a light emitting element, e.g. LED, can be provided if the pressure sensor switch comes in contact with the PCBA.

A light guide may transmit the light form the light emitting element to a light indication element provided at the proximal end of the handle. The light indication element may be a light ring extending 360° around the handle to form an outer surface of the handle. The light guide may be made from glass, polymethylmethacrylate, polycarbonate, copolyester, polypropylene, polyethyleneteraphthalate, or combinations thereof, e.g. polyester and polycarbonate.

A motor with an eccentric weight for operating the personal care implement, may be accommodated within the inner cavity of the housing. The motor may be attached to the distal end of the pivot lever. In other words, while the brush head can be attached on the connector of the pivot lever outside of the housing, the vibration motor is located at the other end of the pivot lever inside the housing to allow maximal generation of vibrations which can be transferred via the pivot lever to the head without significant absorption by the housing.

The inner cavity may also accommodate an energy source, e.g. a battery, and/or other means for operating the personal care implement.

The outer wall of the housing may comprise an opening provided along the longitudinal extension of the handle, e.g. a cut-out, to accommodate a switch assembly for activating the energy source, e.g. for switching the electronically operated personal care implement to an ON/OFF status. The switch assembly may be attached to the inner surface of the wall thereby sealing the opening provided in the wall.

A chassis may be inserted into the inner cavity of the housing. The chassis may comprise a carrier holding components for electrically operating the personal care implement, e.g. motor, electronics and the energy source, for example the battery.

The following is a non-limiting discussion of example embodiments of oral care implements and parts thereof in accordance with the present disclosure, where reference to the Figures is made.

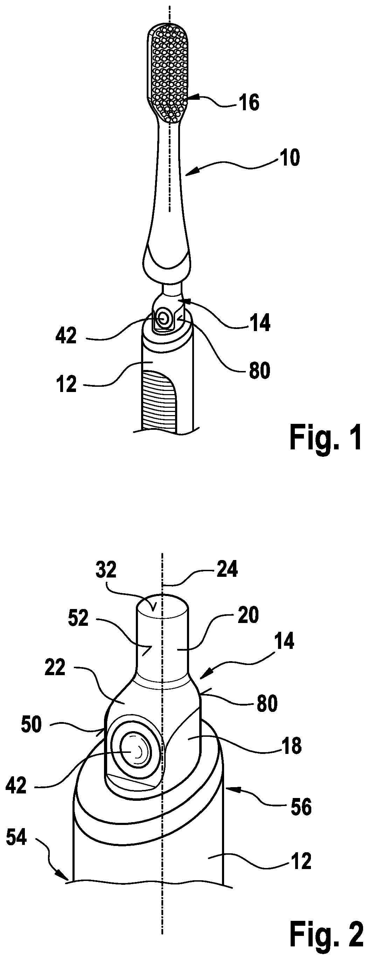

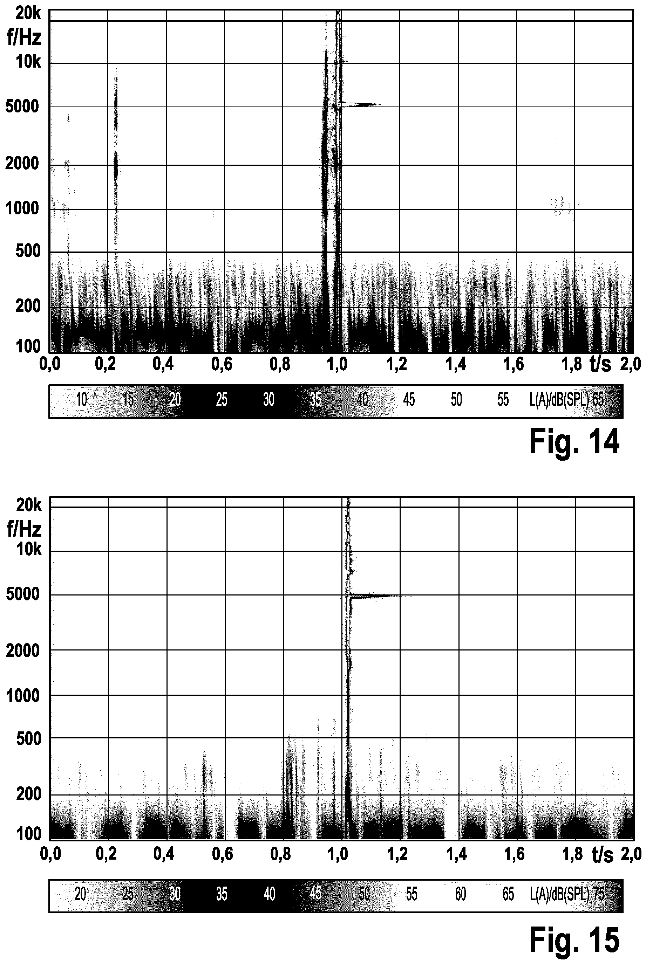

Fig. 1 shows a manual oral care implement 10, in this specific embodiment a manual toothbrush 10. The manual toothbrush 10 comprises a handle 12 to which a connector 14 is attached, and a brush head 16. The brush head 16 is repeatedly attachable to and detachable from the handle 12 via connector 14. When attaching and detaching head 16 and handle 12 of oral care implement 10 via connector 14, a distinct click sound as discussed in relation to Figs. 14 to 23 is produced. Said sound provides a signal to a user that the head is securely attached to or detached from the handle.

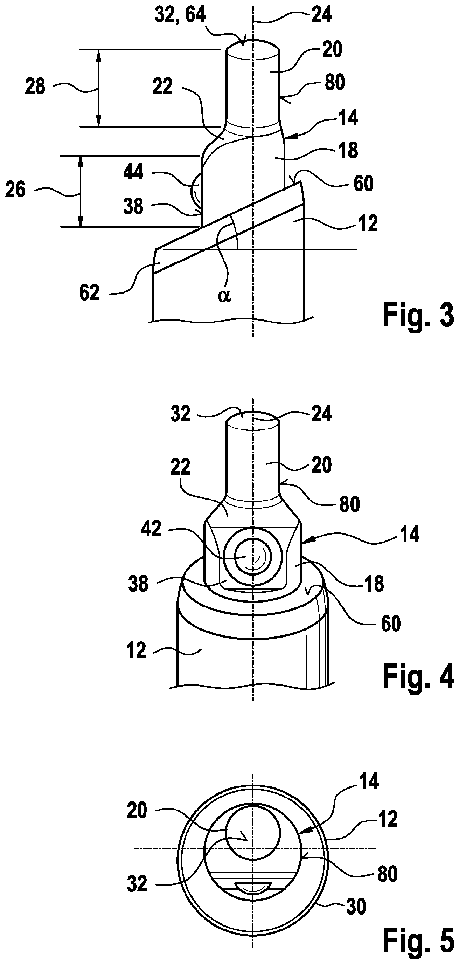

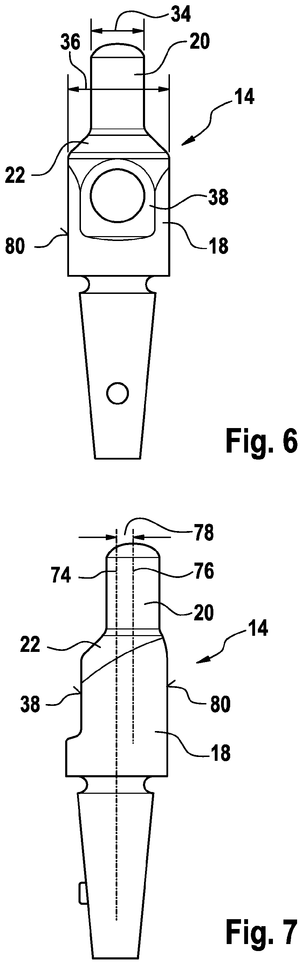

Figs. 2 to 5 show a schematic perspective view, a side view, a front view and a top-down view of handle 12, respectively, the handle 12 comprising connector 14. The connector 14 comprises a first substantially cylindrical section 18, a second substantially cylindrical section 20, and an at least partially conically shaped section 22 connecting the first and the second cylindrical sections 18, 20. The first substantially cylindrical section 18, the at least partially conically section 22 and the second substantially cylindrical sections 20 are arranged in consecutive order and define together a longitudinal length extension 24 of connector 14. The first substantially cylindrical section 18 and the second substantially cylindrical section 20 are placed off-center with respect to the longitudinal length extension 24 of the connector 14. As derivable from side view of Fig. 7, the first and the second substantially cylindrical sections 18, 20 have a first and a second longitudinal central axis 74, 76, respectively, which are defined as the symmetry axis of the first and the second substantially cylindrical sections 18, 20. The first and the second substantially cylindrical sections 18, 20 may be placed/arranged with respect to each other so that the second longitudinal central axis 76 of the second cylindrical section 20 is located off-center with respect to the first longitudinal central axis 74 of the first cylindrical section 18 by a distance 78 of about 1 mm to about 2.5 mm, or of about 1.5 mm to about 2 mm, or of about 1.65 mm. In other words, when seen in a side view (cf. Figs. 3, 7 and 8), the central axis 76 of the second substantially cylindrical section 20 is offset/eccentric from the longitudinal central axis 74 of the first substantially cylindrical section 18 by a distance 78 of about 1 mm to about 2.5 mm, or of about 1.5 mm to about 2 mm, or of about 1.65 mm.

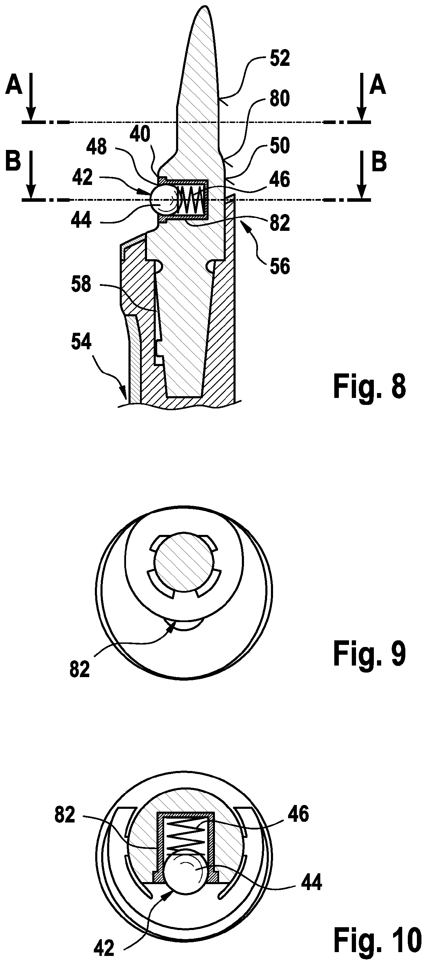

The handle 12 has a distal end 54 and a proximal end 56, the proximal end 56 being closest to a brush head 16 attachable to the handle 12 (see Fig. 2). As shown in Figs. 8 to 10, proximal end 56 of handle 12 comprising a hollow portion/recess 58 into which a portion of the first substantially cylindrical section 18 is fixed, e.g. by a press-fitting process and/or gluing.

The proximal end 56 of the handle 12 comprises a chamfered surface 60 (see Fig. 3). The cross-sectional area 62 extending substantially perpendicular to the longitudinal length extension 64 and the chamfered surface 60 define an angle α from about 15° to about 30°, or from about 18° to about 28°, or about 25°.

The handle 12 may be made from magnetic and/or ferromagnetic material comprising from about 13 weight percent to about 30 weight percent of an amorphous thermoplastic resin; from about 3 weight percent to about 25 weight percent of aluminum oxide, boron nitride or aluminum silicate; and from about 45 weight percent to about 67 weight percent of iron oxide. Such composition provides a material density that is about three times the density of a standard plastic material used for common manual toothbrush handles, e.g. polypropylene.

Figs. 6 and 7 show a schematic front and side view of connector 14, respectively. The first substantially cylindrical section 18 and the second substantially cylindrical section 20 have each a length extension 26, 28 and a cross-sectional area 30, 32 extending substantially perpendicular to the length extension 26, 28. The cross-sectional area 30 of the first substantially cylindrical section 18 and the second cross-sectional area 32 of the second substantially cylindrical section 20 is substantially circular. The first substantially cylindrical section 18 has a cross-sectional area 30 being greater than the cross-sectional area 32 of the second substantially cylindrical section 20. The first cross-sectional area 30 has a diameter 36 of about 8 mm to about 10 mm, or about 9 mm, while the second cross-sectional area 32 has a diameter 34 of about 4 mm to about 6 mm, or about 5 mm.

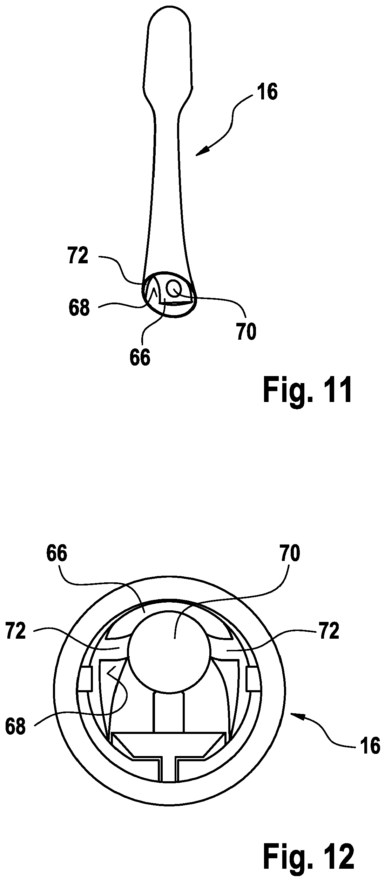

The first substantially cylindrical section 18 comprises a flattening portion 38 at the outer lateral surface 80 of connector 14. Flattening portion 38 extends along the length extension 26 of the first substantially cylindrical section 18. As further derivable from Figs. 8 to 10, the flattening portion comprises a recess 40 which forms an inner cavity 82 within the connector 14. A spring-loaded ball element 42 is inserted into cavity 82 and is fixed therein, e.g. by a press-fitting process and/or gluing. The spring-loaded ball element 42 is an element with a snap-fit locking mechanism to provide sufficiently strong connection and stability between head 16 and handle 12 in an axial direction, i.e. along the longitudinal length extension 24 of the connector and oral care implement 10. The spring-loaded ball element 42 comprises a ball 44 and a spring 46, the spring 46 applying a radial force onto the ball 44 towards the outer circumference 48 and outer lateral surface 80 of connector 14. When the brush head 16 is attached to the handle, ball 44 extends slightly beyond the outer lateral surface of the first substantially cylindrical section 18 and arrests in a corresponding recess 70 provided in a hollow portion 66 of the head shaft (cf. Figs. 11 and 12). Both, the spring 46 and the ball 44 may be made from stainless steel.

Fig. 11 shows a perspective view of brush head 16, and Fig. 12 a respective bottom view. Head 16 comprises hollow portion 66 for receiving the second substantially cylindrical section 20, the at least partially conically shaped section 22 and a part of the first substantially cylindrical section 18 of connector 14. Hollow portion 66 has an inner wall 68 comprising recess 70 for receiving a portion of ball 44 of the spring-loaded ball element 42. Inner wall 68 of hollow portion 66 further comprises two rips 72 being arranged opposite each other for precisely adjusting the head 16 on the connector 14. The shaft of the head may be made from thermoplastic polymer, e.g. polypropylene.

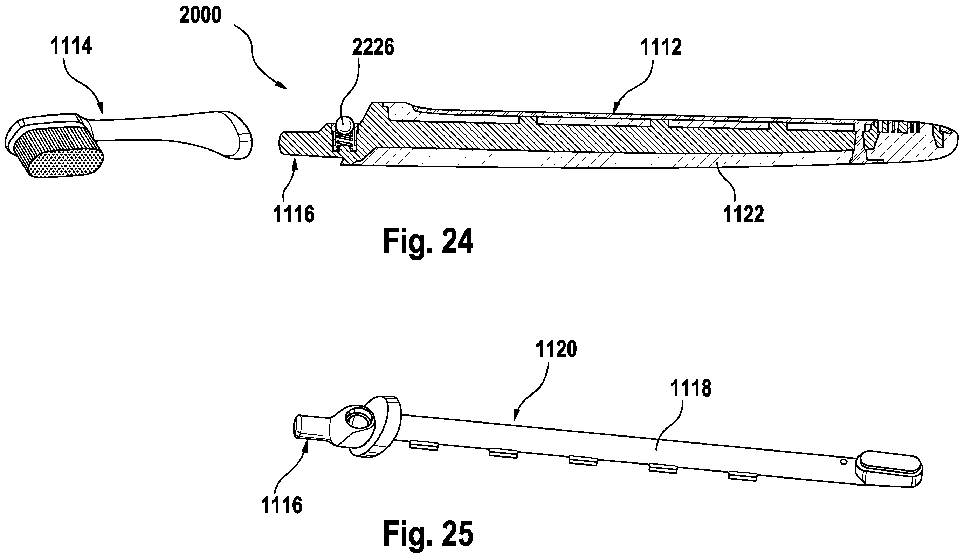

Fig. 24 shows another example embodiment of a manual oral care implement/toothbrush 2000. Manual toothbrush 2000 comprises a handle 1112 and head 1114, the head 1114 being repeatedly attachable to and detachable from the handle 1112 via a connector 1116. The head for manual oral care implement 2000 may be the head as discussed above and shown in Figs. 1, 11 and 12. When attaching and detaching head 1116 and handle 1112 of oral care implement 2000 via connector 1116, a distinct click sound as discussed in relation to Figs. 14 to 23 is produced. Said sound provides a signal to a user that the head is securely attached to or detached from the handle.

Handle 1112 comprises connector 1116 unitarily made with a core structure 1118 to form a core-connector unit 1120, a second component 1122 at least partially covering the core structure 1118, and a spring-loaded snap element 2226. The connector 1116 and the spring-loaded snap element 2226 may have the same configuration as connector 14 and spring-loaded snap element discussed in connection with Figs. 1 to 12.

The core-connector unit 1120 (shown in Fig. 25) may be made from a fiber reinforced material. The fiber reinforced material is a composite material comprising a polymer base material and fiber. The composite material may comprise from about 10wt% to about 50wt%, preferably from about 25wt% to about 35wt%, further preferably about 30wt% fiber. The fibers may be selected from the group of: glass fibers, carbon fibers, aramid fibers, basalt fibers, wood fibers, or any combinations thereof. The polymer base material may be selected from the group of: polyamide, styrene acrylonitrile resin, polybutylene terephthalate, polyethylene terephthalate recycled plastic materials, or mixtures thereof. The polymer base material may at least partially contain recycled plastic material. In this specific embodiment, the fiber reinforced material may comprise polyamide as the polymer base material and from about 30wt% to about 35wt% glass fiber. The fiber reinforced material may have a density from about 1 g/cm³ to about 1.7 g/cm³, in this specific embodiment about 1.4 g/cm³.

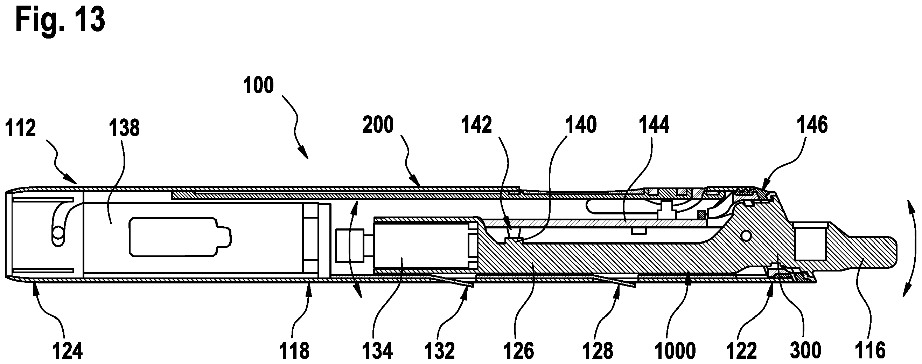

Fig. 13 shows an electrically operated personal care implement 100, in this specific embodiment an electrically operated oral care implement/toothbrush 100. Toothbrush 100 comprises a handle 112 and a head (not shown) being repeatedly attachable to and detachable from the handle 112, by means of connector 116. The connector 116 and spring-loaded ball element may have the same configuration and may be made from the same material as connector 14 and spring-loaded ball element discussed in connection with Figs. 1 to 12. The connector 116 may comprise a spring-loaded ball element comprising a ball and a spring, both, the ball and the spring being made from stainless steel. The spring may apply a radial force onto the ball in a direction towards the outer lateral surface of the connector. The ball may be insertable into a recess provided in a hollow portion of the head to securely fix the head onto the handle 112. The head for the electrically operated oral care implement may be the head as shown in Figs. 1, 11 and 12.

When attaching and detaching head 16 and handle 112 of oral care implement 100 via connector 116, a distinct click sound as discussed in relation to Figs. 14 to 23 is produced. Said sound provides a signal to a user that the head is securely attached to or detached from the handle 112.

The handle 112 as shown in Fig. 13 comprises a housing 200 defining an inner cavity 118. The housing 200 has a proximal end 122 closest to the head, and a distal end 124, the distal end 124 being opposite the proximal end 122.

The connector 116 may be unitarily made with a pressure sensor 126 comprising a pivot lever 128 to form swivel-mounted connector-pressure-sensor unit 1000. The pivot lever 128 is accommodated within the inner cavity 118 of the housing 200. While connector 116 extends through an opening 300 provided at the proximal end 122 of the housing 200, a distal end 132 of the pivot lever 128 extends in the direction of the distal end 124 of the housing 200. The pivot lever 200 and the connector 116 may be unitarily molded from a hard plastic material.

A motor 134 comprising an eccentric weight for operating the personal care implement 100 may be attached to the distal end 132 of the pivot lever 128. A battery for operating the personal care implement 100 is also accommodated within the inner cavity 118 of the housing 200.

The pivot lever 128 can activate a pressure sensor switch 140, e.g. arranged on a Printed Circuit Board Assembly (PCBA) 142. If a predefined level of force, e.g. 5N or more, is applied onto the head of the personal care implement 100, the pivot lever 128 pivots and comes in contact with the PCBA 142 to trigger a light signal visible to a user. Via the PCBA 142 electrical communication between the battery 138 as an example for an energy source, and a light emitting element, e.g. LED, is provided.

A light guide 144 can transmit the light from the light emitting element to a light indication element 146 provided at the proximal end 122 of the handle 112. The light indication element 146 may be a light ring 146 extending 360° around the handle 112 and may form an outer surface of the handle 112.

Figs. 14 to 23 show diagrams displaying characteristics of the sound produced upon attachment and detachment of head and handle of oral care implement 10 via connector 14. The sound provides a signal to a user that the head is securely attached to or detached from the handle.

The sound was measured in an anechoic chamber in the following experimental setup: Five identical toothbrush heads as described in connection with Figs. 1, 11 and 12 were attached and detached to and from five different handles as described in connection with Figs. 1 to 11, resulting in 25 attachment and 25 detachment actions, and respective recordings. A microphone was placed in close proximity to the oral care implement at a distance of 150 mm. While attaching and detaching the refill, a distinct single tone was hearable with a very short reverberation time. The distinct tone was noticeable over a time period of about 0.1s to about 0.3s.

Fig. 14 shows a 3D diagram representing "FFT vs. time" when attaching the head to the handle, and Fig. 15 shows a 3D diagram representing "FFT vs. time" when detaching the head from the handle. Figs. 14 and 15 displaying the sound pressure levels of frequencies during the sound event over time. In the respective diagrams lower noise levels are shown in dark colors, while higher noise levels are shown in lighter/white colors. As derivable form the diagram, the sound event has broad band characteristics over the audibility range. Independent from the action, i.e. whether attachment or detachment, a 5000Hz event is clearly identifiable. The distinct "click" sound takes place within approximately 1.1s to 1.2 s.

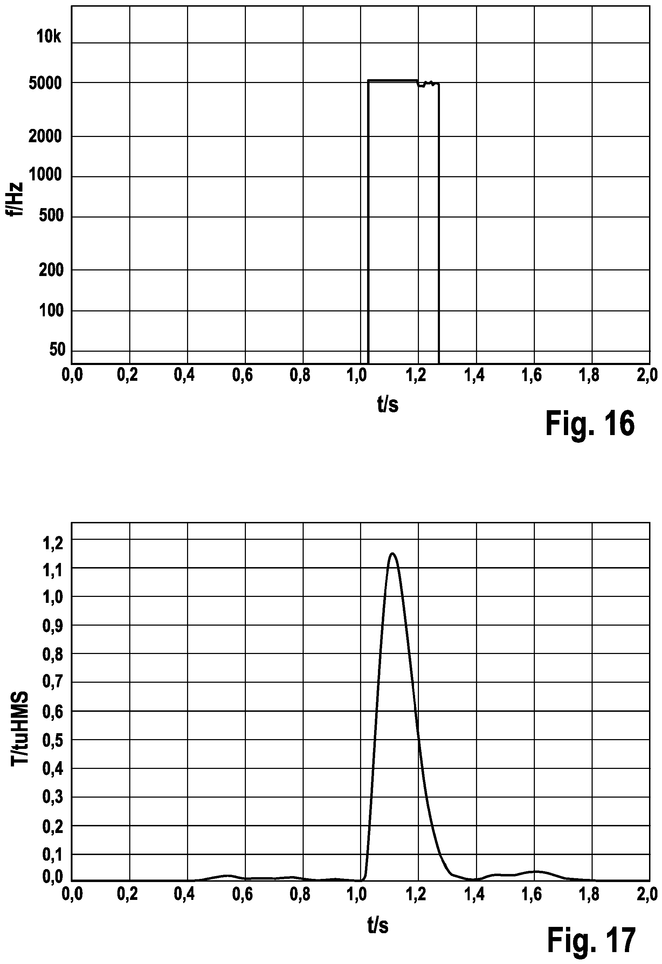

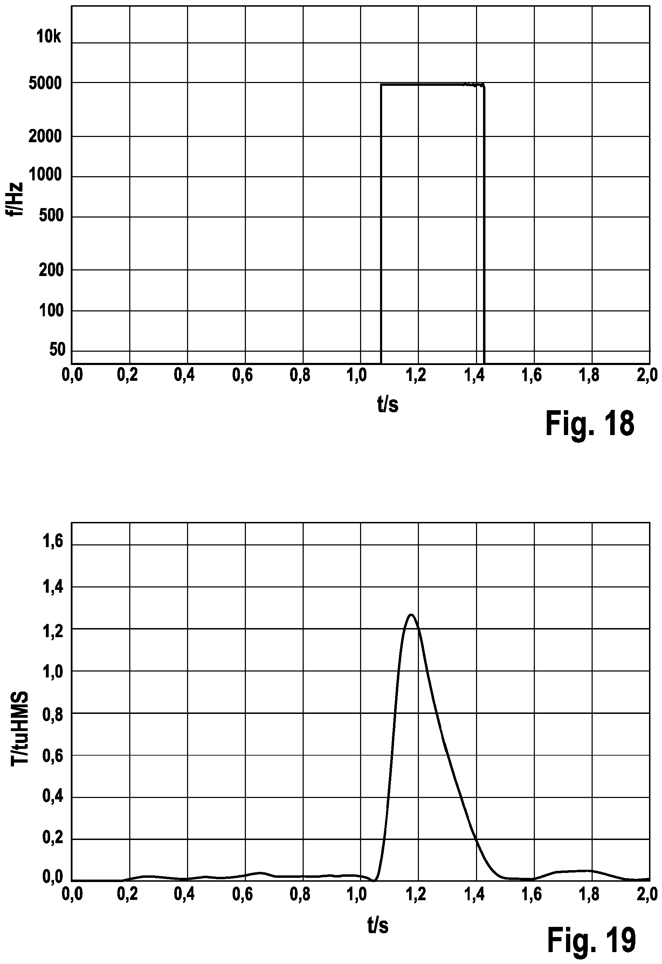

Fig. 16 shows a diagram representing "tonality frequency vs. time (Hearing Model)" when attaching the head to the handle, while Fig. 18 shows a diagram representing "tonality frequency vs. time (Hearing Model)" when detaching the head from the handle. The sound events, irrespective from an attachment or detachment action, show a broad 5000Hz bar. Further, Fig. 17 shows a diagram representing "tonality vs. time (Hearing Model)" when attaching the head to the handle, while Fig. 19 shows a diagram representing "tonality vs. time (Hearing Model)" when detaching the head from the handle. As explained above, "tonality vs. time (Hearing Model)" is used for the determination of tonal components of the sound as well as for the determination of the tone adjustment for the assessment of the sound emissions, and serves for the automatic determination of tones and tone groups from narrow band spectra to express the clarity of a single hearable tone according to human perception. Depending on the width of the bars of Fig. 16 and 18, the graphs shown in Figs. 17 and 19, respectively, have a higher or lower level.

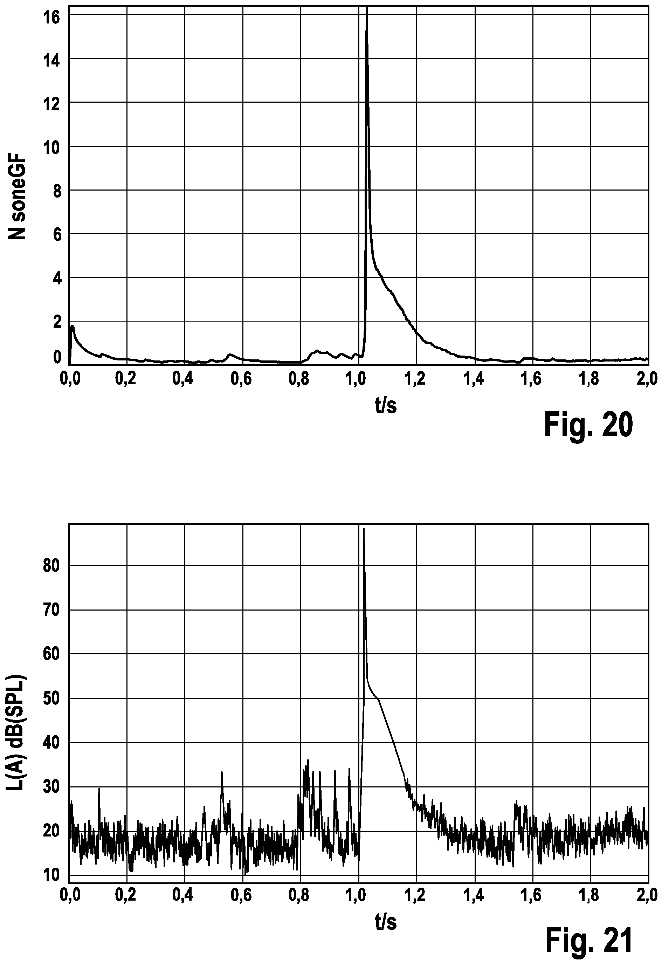

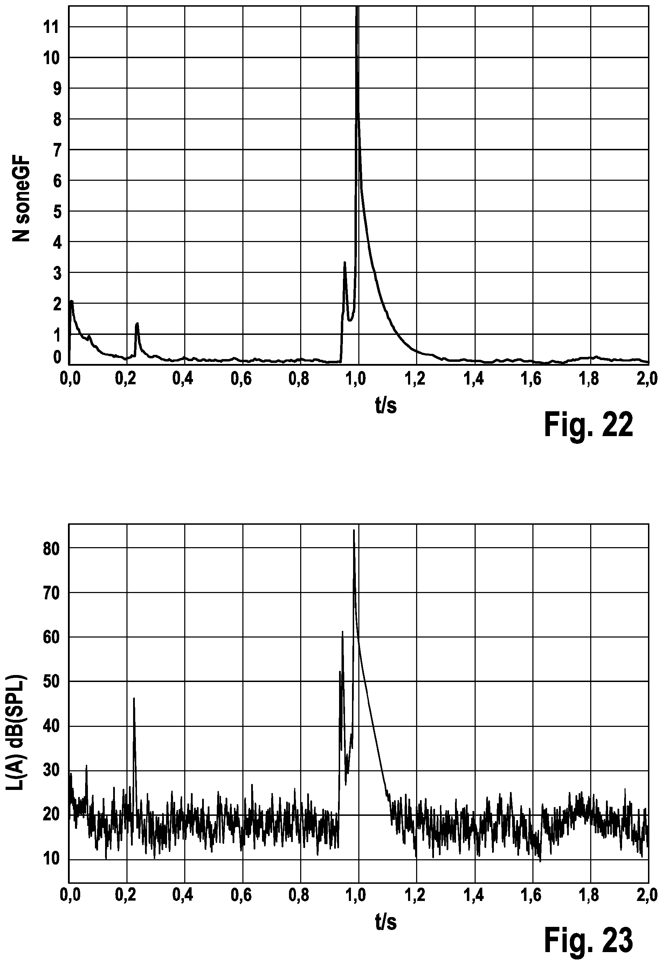

Fig. 21 shows a diagram representing the measured "sound level vs. time" when the head gets detached from the handle, indicating the sound pressure level trend during the sound event according to ISO 532-1. Fig. 20 shows a diagram exhibiting the measured "loudness vs. time" when the head gets detached from the handle, adapted to the psychoacoustic perception of humans according to ISO 532-1. Figs. 23 and 23 show the respective diagrams for the sound generated when the head gets attached to the handle.

Table 1 summarizes the sound characteristics (average values) derivable from the recordings of the 25 head-handle attachment and the 25 head-handle detachment actions (the sound being measured in an anechoic chamber with a microphone placed to the oral care implement at a distance of 150 mm):

**Table 1: Sound characteristics**

| | **Attaching** | **Detaching** |
|---|---|---|
| Tonality (Hearing Model) vs. Time 25 samples AVG | 0,5783 tuHMS | 0,9270 tuHMS |
| Tonality (Hearing Model) Frequency vs. Time 25 level's maximum AVG | 5211 Hz | 5328 Hz |
| Time length of Frequency bar 25 samples AVG | 0,17 s | 0,28 s |
| Level vs. Time 25 samples with 2s length AVG | 56,6 dB(A) | 57,7 dB(A) |
| Loudness vs. Time 25 samples with 2s length AVG | 1,71 soneGF | 2,52 soneGF |
| Loudness vs. Time 25 sample's maximum AVG | 12,05 soneGF | 14,62 soneGF |
| Specific Loudness 25 samples with 2s length AVG | 6,18 soneGF | 7,54 soneGF |

## Claims

1. A personal care implement (10, 100, 2000) comprising a head (16, 1114) and a handle (12, 112, 1112), the handle comprising a core-connector unit comprising a spring-loaded ball-snap element (14, 116, 1116) for releasably engaging into the head (16, 1114), the head (16, 1114) being repeatedly attachable to and detachable from the handle (12, 112, 1112), the core-connector unit exhibiting a sound when the head (16, 1114) gets attached to and/or detached from the handle (12, 112, 1112), thereby providing a signal of secure attachment or detachment, the sound being **characterized by** a tonal component of about 4000Hz to about 6000Hz, preferably over a time length of about 0.1s to about 0.3s on a tonality frequency vs. time analysis according to the hearing model of Sottek.

2. The personal care implement (10, 100, 2000) according to claim 1, wherein the sound is **characterized by** a tonal component of about 4800Hz to about 5400Hz, preferably over a time length of about 0.12s to about 0.28s, further preferably over a time length of about 0.2s on a tonality frequency vs. time analysis according to the hearing model of Sottek.

3. The personal care implement (10, 100, 2000) according to any of the preceding claims, wherein the sound has a sound level vs. time of about 50dB(A) to about 60dB(A), preferably of about 56dB(A) to about 58dB(A), over a time period of about 0.12 to about 0.28s, preferably about 0.2s.

4. The personal care implement (10, 100, 2000) according to any of the preceding claims, wherein the sound has a loudness vs. time of about 1soneGF to about 3soneGF, preferably of about 1.5soneGF to about 2.5soneGF, over a time period of about 0.12 to about 0.28s, preferably about 0.2s, as measured according to ISO 532-1.

5. The personal care implement (10, 100, 2000) according to any of the preceding claims wherein the sound has a specific loudness of about 5soneGF to about 9soneGF, preferably of about 6soneGF to about 8soneGF, over a time period of about 0.12 to about 0.28s, preferably about 0.2s, as measured according to ISO 532-1.

6. The personal care implement (10, 100, 2000) according to any of the preceding claims, wherein the sound has a tonality vs. time according to the hearing model of Sottek of about 0.1tuHMS to about 1.2tuHMS, preferably of about 0.4tuHMS to about 0.9tuHMS.

7. The personal care implement (10, 100, 2000) according to any of the preceding claims, wherein the personal care implement (10, 100, 2000) is a manual or an electrically operated oral care implement (10, 100, 2000), preferably a manual or an electrically operated toothbrush (10, 100, 2000).

8. The personal care implement (10, 100, 2000) according to any of the preceding claims, wherein the core-connector unit is made from a fiber reinforced material, preferably the fiber reinforced material comprising from about 10wt% to about 50wt% fibers, further preferably from about 25 wt% to about 35 wt% fibers.

9. Use of a core-connector unit comprising a spring-loaded ball-snap connector (14, 116, 1116) of a personal care implement (10, 100, 2000) comprising a head (16, 1114) and a handle (12, 112, 1112), the head (16, 1114) being repeatedly attachable to and detachable from the handle (12, 112, 1112), for providing a sound signaling secure attachment or detachment of the head (16, 1114) to or from the handle (12, 112, 1112), the sound being **characterized by** a tonal component of about 4000Hz to about 6000Hz, preferably over a time length of about 0.1s to about 0.3s on a tonality frequency vs. time analysis according to the hearing model of Sottek.

10. Use of a core-connector unit comprising a spring-loaded ball-snap connector (14, 116, 1116) according to claim 9, wherein the sound is **characterized by** a tonal component of about 4800Hz to about 5400Hz, preferably over a time length of about 0.12s to about 0.28s, further preferably over a time length of about 0.2s on a tonality frequency vs. time analysis according to the hearing model of Sottek.

11. Use of a core-connector unit comprising a spring-loaded ball-snap connector (14, 116, 1116) according to claim 9 or 10, wherein the sound has a sound level vs. time of about 50dB(A) to about 60dB(A), preferably of about 56dB(A) to about 58dB(A), over a time period of about 0.12 to about 0.28s, preferably about 0.2s.

12. Use of a core-connector unit comprising a spring-loaded ball-snap connector (14, 116, 1116) according to any of claims 9 to 11, wherein the sound has a loudness vs. time of about 1 soneGF to about 3soneGF, preferably of about 1.5soneGF to about 2.5soneGF, over a time period of about 0.12 to about 0.28s, preferably about 0.2s, as measured according to ISO 532-1.

13. Use of a core-connector unit comprising a spring-loaded ball-snap connector (14, 116, 1116) according to any of claims 9 to 12, wherein the sound has a specific loudness of about 5soneGF to about 9soneGF, preferably of about 6soneGF to about 8soneGF, over a time period of about 0.12 to about 0.28s, preferably about 0.2s, as measured according to ISO 532-1.

14. Use of a core-connector unit comprising a spring-loaded ball-snap connector (14, 116, 1116) according to any of claims 9 to 13, wherein the sound has a tonality vs. time according to the hearing model of Sottek of about 0. 1tuHMS to about 1.2tuHMS, preferably of about 0.4tuHMS to about 0.9tuHMS.

15. Use of a core-connector unit comprising a spring-loaded ball-snap connector (14, 116, 1116) according to any of claims 9 to 14, wherein the core-connector unit is made from a fiber reinforced material, preferably the fiber reinforced material comprising from about 10wt% to about 50wt% fibers, further preferably from about 25 wt% to about 35 wt% fibers.

## Patentansprüche

1. Körperpflegehilfsmittel (10, 100, 2000), umfassend ein Kopfstück (16, 1114) und einen Griff (12, 112, 1112), der Griff umfassend eine Kernverbindereinheit, umfassend ein federbelastetes Kugelschnappelement (14, 116, 1116) zum lösbaren Einrasten in das Kopfstück (16, 1114), wobei das Kopfstück (16, 1114) wiederholt an dem Griff (12, 112, 1112) befestigt und von diesem abgenommen werden kann, wobei die Kernverbindereinheit einen Ton erzeugt, wenn das Kopfstück (16, 1114) an dem Griff (12, 112, 1112) befestigt und/oder von diesem abgenommen wird, wodurch ein Signal für eine sichere Befestigung oder Abnahme bereitgestellt wird, wobei der Ton **gekennzeichnet ist durch** einen tonalen Bestandteil von etwa 4000 Hz bis etwa 6000 Hz, vorzugsweise über eine Zeitdauer von etwa 0,1 Sek. bis etwa 0,3 Sek. bei einer Tonalitätsfrequenz-Zeit-Analyse nach dem Hörmodell von Sottek.

2. Körperpflegehilfsmittel (10, 100, 2000) nach Anspruch 1, wobei der Ton **gekennzeichnet ist durch** einen tonalen Bestandteil von etwa 4800 Hz bis etwa 5400 Hz, vorzugsweise über eine Zeitdauer von etwa 0,12 Sek. bis etwa 0,28 Sek., ferner vorzugsweise über eine Zeitdauer von etwa 0,2 Sek. bei einer Tonalitätsfrequenz-Zeit-Analyse nach dem Hörmodell von Sottek.

3. Körperpflegehilfsmittel (10, 100, 2000) nach einem der vorstehenden Ansprüche, wobei der Ton einen zeitabhängigen Tonpegel von etwa 50 dB(A) bis etwa 60 dB(A), vorzugsweise von etwa 56 dB(A) bis etwa 58 dB(A), über eine Zeitdauer von etwa 0,12 bis etwa 0,28 Sek., vorzugsweise etwa 0,2 Sek. aufweist.

4. Körperpflegehilfsmittel (10, 100, 2000) nach einem der vorstehenden Ansprüche, wobei der Ton eine zeitabhängige Lautstärke von etwa 1 soneGF bis etwa 3 soneGF, vorzugsweise von etwa 1,5 soneGF bis etwa 2,5 soneGF, über eine Zeitdauer von etwa 0,12 bis etwa 0,28 Sek., vorzugsweise etwa 0,2 Sek. aufweist, gemessen nach ISO 532-1.

5. Körperpflegehilfsmittel (10, 100, 2000) nach einem der vorstehenden Ansprüche, wobei der Ton eine spezifische Lautstärke von etwa 5 soneGF bis etwa 9 soneGF, vorzugsweise von etwa 6 soneGF bis etwa 8 soneGF, über eine Zeitdauer von etwa 0,12 bis etwa 0,28 Sek., vorzugsweise etwa 0,2 Sek. aufweist, gemessen nach ISO 532-1.

6. Körperpflegehilfsmittel (10,100, 2000) nach einem der vorstehenden Ansprüche, wobei der Ton eine zeitabhängige Tonalität nach dem Hörmodell von Sottek von etwa 0,1 tuHMS bis etwa 1,2 tuHMS, vorzugsweise von etwa 0,4 tuHMS bis etwa 0,9 tuHMS aufweist.

7. Körperpflegehilfsmittel (10,100, 2000) nach einem der vorstehenden Ansprüche, wobei das Körperpflegehilfsmittel (10, 100, 2000) ein manuelles oder ein elektrisch betriebenes Mundpflegehilfsmittel (10, 100, 2000), vorzugsweise eine manuelle oder eine elektrisch betriebene Zahnbürste (10, 100, 2000) ist.

8. Körperpflegehilfsmittel (10,100, 2000) nach einem der vorstehenden Ansprüche, wobei die Kernverbindereinheit aus einem faserverstärkten Material hergestellt ist, das faserverstärkte Material vorzugsweise umfassend zu etwa 10 Gew.-% bis etwa 50 Gew.-% Fasern, ferner vorzugsweise zu etwa 25 Gew.-% bis etwa 35 Gew.-% Fasern.

9. Verwendung einer Kernverbindereinheit, umfassend einen federbelasteten Kugelschnappverbinder (14, 116, 1116) eines Körperpflegehilfsmittels (10, 100, 2000), umfassend ein Kopfstück (16, 1114) und einen Griff (12, 112, 1112), wobei das Kopfstück (16, 1114) wiederholt an dem Griff (12, 112, 1112) befestigt und von diesem abgenommen werden kann, zum Bereitstellen eines Tons, der eine sichere Befestigung oder Abnahme des Kopfstücks (16, 1114) an oder von dem Griff (12, 112, 1112) signalisiert, wobei der Ton **gekennzeichnet ist durch** einen tonalen Bestandteil von etwa 4000 Hz bis etwa 6000 Hz, vorzugsweise über eine Zeitdauer von etwa 0,1 Sek. bis etwa 0,3 Sek. bei einer Tonalitätsfrequenz-Zeit-Analyse nach dem Hörmodell von Sottek.

10. Verwendung einer Kernverbindereinheit, umfassend einen federbelasteten Kugelschnappverbinder (14, 116, 1116) nach Anspruch 9, wobei der Ton **gekennzeichnet ist durch** einen tonalen Bestandteil von etwa 4800 Hz bis etwa 5400 Hz, vorzugsweise über eine Zeitdauer von etwa 0,12 Sek. bis etwa 0,28 Sek., ferner vorzugsweise über eine Zeitdauer von etwa 0,2 Sek. bei einer Tonalitätsfrequenz-Zeit-Analyse nach dem Hörmodell von Sottek.

11. Verwendung einer Kernverbindereinheit, umfassend einen federbelasteten Kugelschnappverbinder (14, 116, 1116) nach Anspruch 9 oder 10, wobei der Ton einen zeitabhängigen Tonpegel von etwa 50 dB(A) bis etwa 60 dB(A), vorzugsweise von etwa 56 dB(A) bis etwa 58 dB(A), über eine Zeitdauer von etwa 0,12 bis etwa 0,28 Sek., vorzugsweise etwa 0,2 Sek. aufweist.

12. Verwendung einer Kernverbindereinheit, umfassend einen federbelasteten Kugelschnappverbinder (14, 116, 1116) nach einem der Ansprüche 9 bis 11, wobei der Ton eine zeitabhängige Lautstärke von etwa 1 soneGF bis etwa 3 soneGF, vorzugsweise von etwa 1,5 soneGF bis etwa 2,5 soneGF, über eine Zeitdauer von etwa 0,12 bis etwa 0,28 Sek., vorzugsweise etwa 0,2 Sek. aufweist, gemessen nach ISO 532-1.

13. Verwendung einer Kernverbindereinheit, umfassend einen federbelasteten Kugelschnappverbinder (14, 116, 1116) nach einem der Ansprüche 9 bis 12, wobei der Ton eine spezifische Lautstärke von etwa 5 soneGF bis etwa 9 soneGF, vorzugsweise von etwa 6 soneGF bis etwa 8 soneGF, über eine Zeitdauer von etwa 0,12 bis etwa 0,28 Sek., vorzugsweise etwa 0,2 Sek. aufweist, gemessen nach ISO 532-1.

14. Verwendung einer Kernverbindereinheit, umfassend einen federbelasteten Kugelschnappverbinder (14, 116, 1116) nach einem der Ansprüche 9 bis 13, wobei der Ton eine zeitabhängige Tonalität nach dem Hörmodell von Sottek von etwa 0,1 tuHMS bis etwa 1,2 tuHMS, vorzugsweise von etwa 0,4 tuHMS bis etwa 0,9 tuHMS aufweist.

15. Verwendung einer Kernverbindereinheit, umfassend einen federbelasteten Kugelschnappverbinder (14, 116, 1116) nach einem der Ansprüche 9 bis 14, wobei die Kernverbindereinheit aus einem faserverstärkten Material hergestellt ist, das faserverstärkte Material vorzugsweise umfassend zu etwa 10 Gew.-% bis etwa 50 Gew.-% Fasern, ferner vorzugsweise zu etwa 25 Gew.-% bis etwa 35 Gew.-% Fasern.

## Revendications

1. Instrument de soins personnels (10, 100, 2000) comprenant une tête (16, 1114) et un manche (12, 112, 1112), le manche comprenant une unité de connecteur de noyau comprenant un élément d'encliquetage de bille monté sur ressort (14, 116, 1116) pour venir en prise de manière amovible dans la tête (16, 1114), la tête (16, 1114) étant de manière répétée attachable au et détachable du manche (12, 112, 1112), l'unité de connecteur de noyau présentant un son lorsque la tête (16, 1114) est attachée au et/ou détachée du manche (12, 112, 1112), fournissant de ce fait un signal d'attachement ou détachement sécurisé, le son étant **caractérisé par** une composante tonale d'environ 4 000 Hz à environ 6 000 Hz, de préférence sur une longueur de temps d'environ 0,1 s à environ 0,3 s sur une fréquence de tonalité par rapport à une analyse de temps selon le modèle auditif de Sottek.

2. Instrument de soins personnels (10, 100, 2000) selon la revendication 1, dans lequel le son est **caractérisé par** une composante tonale d'environ 4 800 Hz à environ 5 400 Hz, de préférence sur une longueur de temps d'environ 0,12 s à environ 0,28 s, en outre de préférence sur une longueur de temps d'environ 0,2 s sur une fréquence de tonalité par rapport à une analyse de temps selon le modèle auditif de Sottek.

3. Instrument de soins personnels (10, 100, 2000) selon l'une quelconque des revendications précédentes, dans lequel le son a un niveau sonore par rapport à un temps d'environ 50 dB (A) à environ 60 dB (A), de préférence d'environ 56 dB (A) à environ 58 dB (A), sur un laps de temps d'environ 0,12 à environ 0,28 s, de préférence environ 0,2 s.

4. Instrument de soins personnels (10, 100, 2000) selon l'une quelconque des revendications précédentes, dans lequel le son a une sonie par rapport à un temps d'environ 1 soneGF à environ 3 soneGF, de préférence d'environ 1,5 soneGF à environ 2,5 soneGF, sur un laps de temps d'environ 0,12 à environ 0,28 s, de préférence environ 0,2 s, telle que mesurée selon ISO 532-1.

5. Instrument de soins personnels (10, 100, 2000) selon l'une quelconque des revendications précédentes dans lequel le son a une sonie spécifique d'environ 5 soneGF à environ 9 soneGF, de préférence d'environ 6 soneGF à environ 8 soneGF, sur un laps de temps d'environ 0,12 à environ 0,28 s, de préférence environ 0,2 s, telle que mesurée selon ISO 532-1.

6. Instrument de soins personnels (10, 100, 2000) selon l'une quelconque des revendications précédentes, dans lequel le son a une tonalité par rapport à un temps selon le modèle auditif de Sottek d'environ 0,1 tuHMS à environ 1,2 tuHMS, de préférence d'environ 0,4 tuHMS à environ 0,9 tuHMS.

7. Instrument de soins personnels (10, 100, 2000) selon l'une quelconque des revendications précédentes, dans lequel l'instrument de soins personnels (10, 100, 2000) est un instrument bucco-dentaire manuel ou à commande électrique (10, 100, 2000), de préférence une brosse à dents manuelle ou à commande électrique (10, 100, 2000).

8. Instrument de soins personnels (10, 100, 2000) selon l'une quelconque des revendications précédentes, dans lequel l'unité de connecteur de noyau est faite à partir d'un matériau renforcé de fibres, de préférence le matériau renforcé de fibres comprenant d'environ 10 % en poids à environ 50 % en poids de fibres, en outre de préférence d'environ 25 % en poids à environ 35 % en poids de fibres.

9. Utilisation d'une unité de connecteur de noyau comprenant un connecteur à encliquetage de bille monté sur ressort (14, 116, 1116) d'un instrument de soins personnels (10, 100, 2000) comprenant une tête (16, 1114) et un manche (12, 112, 1112), la tête (16, 1114) étant de manière répétée attachable au et détachable du manche (12, 112, 1112), pour la fourniture d'un son signalant un attachement ou détachement sécurisé de la tête (16, 1114) au ou du manche (12, 112, 1112), le son étant **caractérisé par** une composante tonale d'environ 4 000 Hz à environ 6 000 Hz, de préférence sur une longueur de temps d'environ 0,1 s à environ 0,3 s sur une fréquence de tonalité par rapport à une analyse de temps selon le modèle auditif de Sottek.

10. Utilisation d'une unité de connecteur de noyau comprenant un connecteur à encliquetage de bille monté sur ressort (14, 116, 1116) selon la revendication 9, dans laquelle le son est **caractérisé par** une composante tonale d'environ 4 800 Hz à environ 5 400 Hz, de préférence sur une longueur de temps d'environ 0,12 s à environ 0,28 s, en outre de préférence sur une longueur de temps d'environ 0,2 s sur une fréquence de tonalité par rapport à une analyse de temps selon le modèle auditif de Sottek.

11. Utilisation d'une unité de connecteur de noyau comprenant un connecteur à encliquetage de bille monté sur ressort (14, 116, 1116) selon la revendication 9 ou 10, dans laquelle le son a un niveau sonore par rapport à un temps d'environ 50 dB (A) à environ 60 dB (A), de préférence d'environ 56 dB (A) à environ 58 dB (A), sur un laps de temps d'environ 0,12 à environ 0,28 s, de préférence environ 0,2 s.

12. Utilisation d'une unité de connecteur de noyau comprenant un connecteur à encliquetage de bille monté sur ressort (14, 116, 1116) selon l'une quelconque des revendications 9 à 11, dans laquelle le son a une sonie par rapport à un temps d'environ 1 soneGF à environ 3 soneGF, de préférence d'environ 1,5 soneGF à environ 2,5 soneGF, sur un laps de temps d'environ 0,12 à environ 0,28 s, de préférence environ 0,2 s, telle que mesurée selon ISO 532-1.

13. Utilisation d'une unité de connecteur de noyau comprenant un connecteur à encliquetage de bille monté sur ressort (14, 116, 1116) selon l'une quelconque des revendications 9 à 12, dans laquelle le son a une sonie spécifique d'environ 5 soneGF à environ 9 soneGF, de préférence d'environ 6 soneGF à environ 8 soneGF, sur un laps de temps d'environ 0,12 à environ 0,28 s, de préférence environ 0,2 s, telle que mesurée selon ISO 532-1.

14. Utilisation d'une unité de connecteur de noyau comprenant un connecteur à encliquetage de bille monté sur ressort (14, 116, 1116) selon l'une quelconque des revendications 9 à 13, dans laquelle le son a une tonalité par rapport à un temps selon le modèle auditif de Sottek d'environ 0,1 tuHMS à environ 1,2 tuHMS, de préférence d'environ 0,4 tuHMS à environ 0,9 tuHMS.

15. Utilisation d'une unité de connecteur de noyau comprenant un connecteur à encliquetage de bille monté sur ressort (14, 116, 1116) selon l'une quelconque des revendications 9 à 14, dans laquelle l'unité de connecteur de noyau est faite à partir d'un matériau renforcé de fibres, de préférence le matériau renforcé de fibres comprenant d'environ 10 % en poids à environ 50 % en poids de fibres, en outre de préférence d'environ 25 % en poids à environ 35 % en poids de fibres.
